# DEMANDE DE BREVET EUROPEEN

(11) **EP 3 144 191 A1**
(43) Date de publication de la demande: **22.03.2017**
(21) Numéro de dépôt: 16188983.7
(22) Date de dépôt: 15.09.2016
(51) Int. Cl.: B60S 1/48, B60S 1/08

(54) **PROCÉDÉ DE DÉGIVRAGE D'UNE VITRE D'UN VÉHICULE**

(30) Priorité: 15.09.2015 FR 1558608; 18.09.2015 FR 1558782
(71) Demandeur: Valeo Systèmes d'Essuyage, 78322 Le Mesnil Saint Denis (FR)
(72) Inventeur: KOLANOWSKI, Grégory, 43300 SIAUGUES SAINTE MARIE (FR); GRASSO, Giuseppe, 63340 Le Breuil sur Couze (FR); TREBOUET, Marcel, 78450 CHAVENAY (FR); NEGRE, Pierre-Emmanuel, 75014 PARIS (FR)
(74) Mandataire: Callu Danseux, Violaine

(57) **Abrégé**

Procédé de lavage d'une vitre de véhicule automobile par utilisation d'un dispositif comprenant :
- au moins un réservoir contenant un fluide dégivrant,
- un système de canalisation reliant le au moins un réservoir à des orifices par lesquels est projeté le fluide sur la vitre,
- une pompe d'alimentation destinée à faire circuler le fluide dans le système de canalisation jusqu'à son éjection par les orifices précités, et
- au moins un balai d'essuyage apte à se déplacer sur la vitre sous l'action d'un moteur d'entraînement,
caractérisé en ce qu'il comprend :
a) un découpage du secteur angulaire balayé par ledit au moins un balai en secteurs élémentaires, et
b) sur, au moins un secteur élémentaire, une modulation de la pression de sortie de la pompe d'alimentation entre une pression dite nominale et une pression, non nulle, réduite par rapport à cette pression nominale.

## Description

Le secteur technique de la présente invention est celui des procédés de lavage et plus particulièrement de dégivrage d'une vitre d'un véhicule, notamment automobile, en utilisant un dispositif d'essuyage et de lavage ou de dégivrage de ladite vitre.

Les automobiles sont couramment équipées d'installations d'essuyage et de systèmes de lavage pour assurer un essuyage et un lavage du pare-brise et éviter ainsi que la vision qu'a le conducteur de son environnement ne soit perturbée. Une telle installation comprend généralement deux balais d'essuyage qui raclent la surface extérieure du pare-brise de manière à évacuer l'eau présente sur cette surface. Des gicleurs sont positionnés au niveau du capot du véhicule ou, dans une version plus récente, sur les balais, et sont alimentés en liquide lave-glace par l'intermédiaire d'une pompe et d'un système de canalisation reliés à un réservoir de liquide lave-glace.

Dans le but de laver le pare-brise, notamment en absence de pluie, de tels systèmes sont classiquement équipés d'un premier réservoir contenant un liquide nettoyant, d'un système de canalisation reliant le réservoir à des gicleurs, et d'une pompe apte à faire circuler le liquide dans le système de canalisation jusqu'aux gicleurs. Dans le but de dégivrer le pare-brise par temps froid, il est connu d'utiliser le système de canalisation et les gicleurs du système de lavage pour faire circuler un liquide de dégivrage, issu d'un second réservoir, en lieu et place du liquide de lavage.

Les deux réservoirs peuvent posséder chacun leur pompe mais sont généralement reliés au même système de canalisation emmenant l'un ou l'autre des liquides jusqu'aux gicleurs par lesquels ils sont projetés sur le pare-brise. Ainsi, lorsque l'on veut projeter du liquide de dégivrage sur le pare-brise on désactive la pompe de lavage et on active la pompe de dégivrage.

Le liquide de dégivrage est plus onéreux que les liquides nettoyants classiques et il importe de n'en projeter que la quantité strictement nécessaire au dégivrage du pare-brise. Pour cela il est connu d'activer et de désactiver le moteur et la pompe servant à projeter ce liquide actif plusieurs fois au cours de la rotation des balais, entre leur position de repos et leur position haute sur le pare-brise. L'intervalle entre deux activations consécutives est déterminé par le temps qui est nécessaire pour que le liquide se répande et imprègne la glace présente sur le pare-brise. L'activation et la désactivation est alors déclenchée par le passage du balai sur des positions angulaires prédéfinies sur le pare-brise. Cette solution présente cependant l'inconvénient de solliciter fortement cette pompe et de réduire sa durée de vie.

L'invention vise à améliorer la situation et concerne à cet effet un procédé de lavage d'une vitre de véhicule automobile ledit véhicule étant équipé d'un dispositif comprenant :
- au moins un réservoir contenant un fluide, de préférence un fluide dégivrant,
- un système de canalisation reliant le au moins un réservoir à des orifices par lesquels est projeté le fluide sur le pare-brise,
- une pompe d'alimentation destinée à faire circuler le fluide dans le système de canalisation jusqu'à son éjection par les orifices précités, et
- au moins un balai d'essuyage apte à se déplacer sur la vitre entre un point bas et un point haut sous l'action d'un moteur d'entraînement en rotation,
caractérisé en ce qu'il comprend :
a) un découpage du secteur angulaire balayé par ledit au moins un balai en secteurs élémentaires, et
b) sur, au moins un desdits secteurs élémentaires, une modulation de la pression de sortie de la pompe d'alimentation entre une pression dite nominale et une pression, non nulle, réduite par rapport à cette pression nominale.

De préférence, le procédé de lavage est un procédé de dégivrage d'une vitre.

La réduction de la pression de sortie permet de réduire le volume de liquide projeté pour l'adapter à la quantité qui est juste nécessaire au dégivrage, en tirant partie du temps que ce liquide met pour agir sur le givre ou la glace. Elle permet en conséquence une réduction de la consommation du liquide et donc de réaliser des économies.

Avantageusement la pression réduite est au moins égale à 40% de la valeur nominale. Cette valeur assure des économies importantes et laisse la pompe suffisamment réactive pour revenir rapidement à son débit nominal.

Préférentiellement la pression de sortie de ladite pompe d'alimentation varie sur ledit au moins un desdits secteurs élémentaires d'une valeur réduite à sa valeur nominale puis de cette valeur nominale à une valeur réduite. Cet enchaînement des niveaux de pression permet de délivrer, pendant un temps adapté, la quantité de liquide juste nécessaire à l'étalement du liquide sur la vitre et d'économiser le liquide par réduction de la quantité projetée le reste du temps.

Avantageusement la pression de sortie de ladite pompe varie sur chacun des secteurs élémentaires balayés par ledit balai au cours de la montée vers son point haut, à l'exception éventuelle d'un secteur d'amorçage et d'un secteur d'achèvement, d'une valeur réduite à sa valeur nominale puis revient à sa valeur réduite initiale. La répétition de l'enchaînement des cycles sur chaque secteur élémentaire garantit une économie maximale de la consommation du liquide de dégivrage.

De façon préférentielle le procédé comprend, sur ledit au moins un des secteurs élémentaires, une modulation de la vitesse de rotation du moteur d'entraînement entre une vitesse dite nominale et une vitesse, non nulle, réduite par rapport à cette vitesse nominale. La modulation de la vitesse de rotation du balai permet de délivrer au balai une vitesse qui est optimale pour l'étalement du liquide au moment où celui-ci est projeté sur la vitre.

Avantageusement la vitesse de rotation réduite est au moins égale à 50% de la vitesse nominale. Cette valeur laisse le moteur d'entraînement suffisamment réactif pour revenir rapidement à sa vitesse nominale.

Préférentiellement la vitesse de rotation du moteur d'entraînement varie sur ledit au moins un des secteurs élémentaires d'une valeur réduite à sa valeur nominale puis de cette valeur nominale à une valeur réduite. Cet enchaînement des niveaux de vitesse permet de donner au balai une vitesse qui soit bien adaptée au temps d'étalement du liquide sur la vitre.

Avantageusement la vitesse de rotation dudit moteur d'entraînement varie sur chacun des secteurs élémentaires balayés par ledit balai au cours de la montée vers son point haut (PH), à l'exception éventuelle d'un secteur d'amorçage et d'un secteur d'achèvement, d'une valeur réduite à sa valeur nominale puis revient à sa valeur réduite initiale.

De façon préférentielle ladite vitesse de rotation du moteur d'entraînement est toujours nominale quand la pression de la pompe d'alimentation est nominale. Cette concomitance des valeurs nominales garantit que le liquide de dégivrage est projeté sur la vitre quand le balai tourne à la vitesse la mieux adaptée à l'étalement de ce liquide.

De façon plus préférentielle la vitesse du moteur d'entraînement est nominale avant l'atteinte de sa valeur nominale par la pression de sortie de la pompe d'alimentation et/ou après la réduction de ladite pression de sortie par rapport à sa valeur nominale. Ce décalage permet d'attendre la pleine vitesse du balai avant de projeter le liquide sur la vitre.

Dans un mode particulier de réalisation le procédé est mis en oeuvre lors de la montée dudit balai vers le point haut, une purge du système de canalisation étant mise en oeuvre lors de la redescente dudit balai vers le point bas.

L'invention porte également sur un dispositif de lavage d'une vitre de véhicule automobile comprenant :
- au moins un réservoir contenant un fluide, de préférence un fluide dégivrant,
- un système de canalisation reliant le au moins un réservoir à des orifices par lesquels est projeté le fluide sur la vitre,
- une pompe d'alimentation destinée à faire circuler le fluide dans le système de canalisation jusqu'à son éjection par les orifices précités, et
- au moins un balai d'essuyage apte à se déplacer sur la vitre sous l'action d'un moteur d'entraînement en rotation,
caractérisé en ce qu'il comprend en outre un moyen de commande capable de moduler la pression de sortie de la pompe d'alimentation entre une pression dite nominale et une pression, non nulle, réduite par rapport à cette pression nominale.

Avantageusement ledit moyen de commande est capable de moduler la vitesse de rotation du moteur d'entraînement dudit balai d'essuyage entre une vitesse dite nominale et une vitesse, non nulle, réduite par rapport à cette vitesse nominale.

Dans un mode particulier de réalisation le moteur d'entraînement et/ou la pompe d'alimentation sont du type pas à pas à courant continu, ou du type réversible, dont la vitesse de rotation et/ou respectivement la pression de sortie sont contrôlées par une modulation de la largeur d'impulsion de leur signal de commande.

Alternativement, la régulation de pression de sortie de la pompe peut également être pilotée en faisant varier la tension d'alimentation de ladite pompe.

Avantageusement le procédé de lavage et le dispositif de lavage selon l'invention sont mis en oeuvre grâce à des orifices de projection de liquide situés sur les balais d'essuie-glace et/ou sur les bras d'actionnement servant à déplacer ces balais. De préférence, les balais d'essuie-glace et/ou les bras d'actionnement comportent des canaux de circulation de fluide munis d'orifices s'étendant respectivement le long des balais ou le long des bras d'actionnement.

D'autres caractéristiques et avantages de l'invention apparaîtront à la lecture de la description qui suit et d'exemples de réalisation donnés à titre illustratif en référence aux figures annexées. Sur ces figures :
- la figure 1 est une vue schématique d'un dispositif de lavage d'un pare-brise de véhicule automobile ;
- la figure 2 est un graphique illustrant les différentes étapes d'un mode de réalisation du procédé de dégivrage selon l'invention.

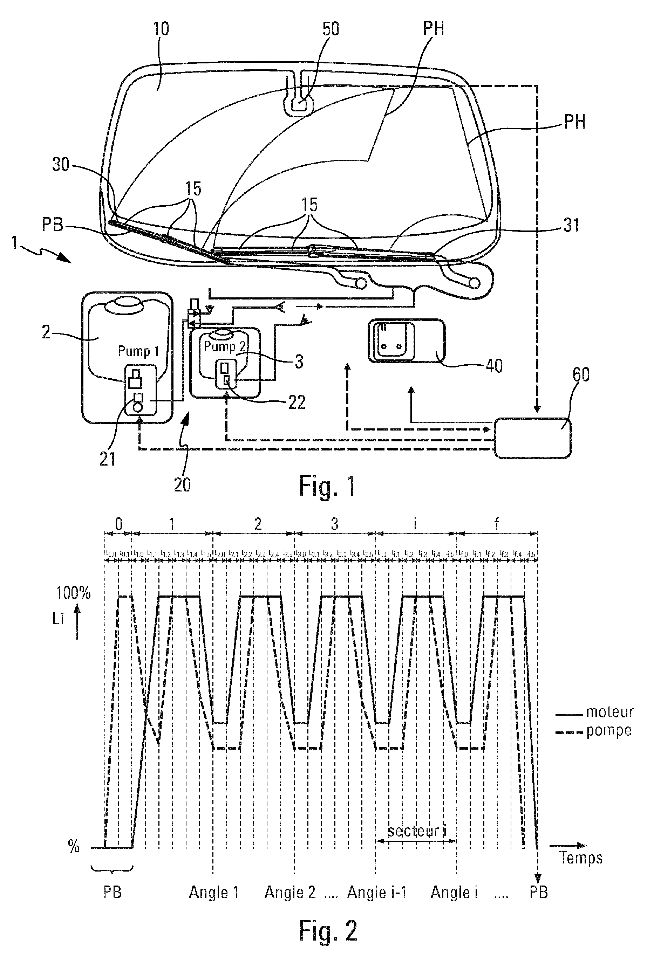

Le procédé de lavage de l'invention utilise un dispositif de lavage 1 appliqué sur un pare-brise 10 de véhicule automobile tel qu'illustré à la figure 1. Un tel dispositif de lavage comprend un premier réservoir 2 contenant un premier fluide, tel qu'un liquide de lavage, et un deuxième réservoir 3 comprenant un deuxième fluide, tel qu'un liquide de dégivrage.

Le dispositif de lavage 1 comprend également un système de canalisation 5 reliant le premier réservoir 2 et le deuxième réservoir 3 à des orifices 15 par lesquels sont éjectés du premier fluide et/ou du deuxième fluide sur le pare-brise 10. Il comprend en outre un système de pompe 20 destiné à faire circuler du premier fluide et/ou du deuxième fluide dans le système de canalisation 5 jusqu'à éjection par les orifices 15. Le système de pompe 20 comprend ici deux pompes 21, 22 indépendantes. Une première pompe 21 est associée au premier réservoir 2 et est destinée à faire circuler du premier fluide dans le système de canalisation 5 et une deuxième pompe 22 est associée au deuxième réservoir 3 et est destinée à faire circuler du deuxième fluide dans le système de canalisation 5.

Le dispositif de lavage 1 comprend au moins un balai d'essuyage 30 monté sur un bras 31 et apte à se déplacer sur le pare-brise 10 entre une position basse PB et une position haute PH. Le dispositif de lavage 1 de la figure 1 comprend deux balais d'essuyage 30. Les orifices 15 précités sont, ici, situés tout le long des balais d'essuyage 30. Les orifices 15 sont disposés de manière à projeter du premier fluide et/ou du deuxième fluide vers le haut des balais d'essuyage 30, c'est-à-dire vers le haut du pare-brise 10. Le système pourrait aussi bien être mis en oeuvre avec des orifices 15 situés des deux côtés du balai d'essuie-glace, la projection de liquide s'effectuant alors soit uniquement dans le sens de la montée, soit uniquement du côté d'avancement du balai. Il est également possible que les orifices 15 situés des deux côtés des balais d'essuyage 30 projettent simultanément le liquide.

Le dispositif de lavage 1 comprend également un moteur 40 destiné à entraîner les balais d'essuyage 30 entre leurs positions basses et leurs positions hautes respectives. Le dispositif de lavage de la figure 1 comprend en outre, sans que cette configuration ne soit essentielle à la réalisation de l'invention, au moins un capteur 50. Il est situé ici sur une partie haute du pare-brise, au centre de celui-ci. Il est notamment situé au niveau d'une zone du pare-brise 10 balayée par un seul des deux balais d'essuyage 30. Le capteur 50 peut notamment être un capteur de température ou de pluie.

Le dispositif de lavage 1 comprend de plus un boitier électronique 60 capable de commander le moteur 40 d'entraînement des balais d'essuyage 30 et l'activation du système de pompe 20, les première et deuxième pompes 21, 22 pouvant être commandées de manière indépendante. Dans la suite de la description de l'invention le moteur 40 d'entraînement des balais d'essuie-glace et la deuxième pompe 22 d'alimentation en liquide de dégivrage sont choisis comme étant des moteurs ou des pompes du type pas à pas à courant continu, ou du type réversible, dont la vitesse de rotation pour l'un et la pression de sortie pour l'autre, sont contrôlées par une modulation de la largeur d'impulsion de leur signal de commande. Tout autre dispositif peut être envisagé pour autant que cette vitesse et/ou cette pression de sortie, soient modulables.

La figure 2 représente un mode de réalisation du procédé de dégivrage d'une vitre selon l'invention, et est illustré par un graphe dans lequel sont représentés, en abscisse le temps t, et en ordonnées, à la fois la largeur d'impulsion (LI) du moteur d'entraînement 40 des balais d'essuie-glace 30 (ligne continue) et celle de la pompe 22 d'alimentation des gicleurs 15 en liquide de dégivrage (ligne discontinue).
On voit que l'amplitude de la rotation d'un balai entre son point bas PB (ou position de repos) et son point haut PH (ou position opposée à la position de repos) est découpée en une succession de secteurs angulaires, dont le nombre, et donc l'amplitude angulaire de chacun, est fonction de la finesse que l'on recherche pour le pilotage du moteur et celui de la pompe. Cette amplitude angulaire répond, là encore, à un impératif de temps suffisant pour que le liquide de dégivrage, qui est projeté de façon discrète sur chaque secteur élémentaire, puisse se répandre et imprégner la glace du pare-brise.

La description du fonctionnement du moteur d'entraînement 40 et de la pompe de dégivrage 22 va être donnée en référence à un secteur élémentaire donné "i", qui s'étend entre un angle i-1 et un angle i, mesurés à partir du point bas PB. Le pilotage du moteur d'entraînement 40 et de la pompe d'alimentation 22 sont identiques sur les autres secteurs, ce schéma de pilotage se répétant sur toute l'amplitude angulaire de balayage par les balais 30, à l'exception du premier secteur référencé 0 et du secteur final référencé f, pour lesquels le pilotage de ces deux équipements sera décrit plus loin.

Au début du secteur élémentaire i, c'est-à-dire au niveau de l'angle i-1, la vitesse du moteur d'entraînement 40 et la pression de sortie de la pompe d'alimentation 22 sont réduites par un signal de commande dont la largeur d'impulsion est respectivement de 50% pour le moteur et de 40% pour la pompe, de leur valeur maximale. Ces valeurs réduites sont maintenues pendant une duré ti.0.

Puis, au bout du temps ti.0, la largeur d'impulsion envoyée à la commande du moteur d'entraînement 40 est portée progressivement à 100%, sur une durée ti.1 qui correspond à la vitesse maximale de réponse à la commande de variation du régime du moteur. Cette largeur d'impulsion est ensuite maintenue à 100% pendant une durée égale à la somme de trois durées ti.2, ti.3 et ti.4. Pendant tout ce temps, la vitesse de rotation du moteur d'entraînement 40 est maximale, c'est-à-dire, par exemple, qu'elle est égale à sa valeur nominale de rotation au cours d'une utilisation des balais pour l'essuyage du pare-brise. Au-delà de ce temps ti.4, la largeur d'impulsion est ramenée à sa valeur réduite de 50%, et ce, pendant une durée ti.5.

Parallèlement la largeur d'impulsion donnée au signal de commande de la pompe d'alimentation 22 reste à sa valeur réduite de 40% pendant la première durée ti.1, en prolongation de la durée initiale ti.0. Elle est ensuite portée progressivement à 100%, pendant une durée ti.2 qui correspond à la vitesse maximale de réponse de la commande de la pompe. La largeur d'impulsion est ensuite maintenue à 100% pendant une durée égale à la durée ti.3. Pendant tout ce temps, la pression de sortie de la pompe d'alimentation 22 est maximale, c'est-à-dire, par exemple, qu'elle est égale à sa pression nominale au cours d'une utilisation des balais pour le lavage du pare-brise (hors mise en oeuvre de la fonction de dégivrage).

Au-delà de ce temps, et pendant une durée ti.4 qui correspond au temps de réponse du dispositif de commande de la pompe, la largeur d'impulsion est ramenée initialement à une première valeur réduite, égale à 60% de la valeur maximale, puis au cours d'une durée ti.5, à une valeur encore plus réduite, égale à 40% de la valeur maximale de la largeur d'impulsion. Au bout de ce temps ti.5, les largeurs d'impulsion du moteur d'entraînement 40 et de la pompe d'alimentation 22 sont revenues aux valeurs qu'elles avaient en début du secteur i, et peuvent suivre un nouveau cycle, sur un secteur i+1.

Tous ces cycles, identiques, sont précédés d'un cycle d'amorçage, référencé "0" et d'un cycle d'achèvement référencé "f".

Dans la position de repos des balais, au début du cycle d'amorçage, les balais sont immobiles dans la position basse, le moteur d'entraînement et la pompe d'alimentation étant à l'arrêt du fait d'une largeur d'impulsion transmise à leur système de commande qui est égale à zéro. Pendant un temps t0.0 alors que le moteur d'entraînement 40 est maintenu à l'arrêt, la largeur d'impulsion de la commande de la pompe d'alimentation 22 est progressivement amenée à 100%, cette durée t0.0 correspondant à la vitesse maximale d'accroissement de la largeur d'impulsion entre 0 et 100%. Cette largeur d'impulsion de 100% est maintenue pendant une durée t0.1, le temps que le liquide de dégivrage se répande sur la partie basse du pare-brise et fasse fondre la glace qui a pu s'y accumuler et bloquer les balais 15. Au bout de ce temps t0.1, et pendant une durée égale à t1.0 et t1.1, le moteur d'entraînement 40 est mis en route par un passage progressif de la largeur d'impulsion de son signal de commande de 0 à 100%. Parallèlement la largeur d'impulsion de la pompe d'alimentation 22 est réduite de 100% vers 60% puis 40% au cours respectivement des deux temps t1.0 et t1.1 qui correspondent aux deux premiers temps du premier cycle de dégivrage selon l'invention, ce cycle étant mis en oeuvre sur le secteur angulaire dont la valeur i est égale à 1. Le raccordement entre le cycle d'amorçage et le premier cycle s'effectue de façon satisfaisante en choisissant de façon appropriée les durées t1.0 et t1.1. La durée t1.0 est telle que l'impulsion du moteur arrive approximativement à 50% au bout de ce temps. Quant à la durée t1.1, elle est choisie de façon que, au bout de ce temps, simultanément la largeur d'impulsion du moteur d'entraînement 40 arrive à 100% et la largeur d'impulsion de la pompe d'alimentation 22 arrive à la valeur de 40%.

Au cours du cycle d'achèvement "f", l'amplitude d'impulsion de la commande du moteur et l'amplitude d'impulsion de la commande de la pompe d'alimentation 22 sont toutes les deux à 100% au bout de la durée tf.3. Ces amplitudes vont alors être réduites séparément, tout d'abord l'amplitude d'impulsion du signal de commande de la pompe d'alimentation 22, va être portée à zéro et donc à l'arrêt complet de la pompe d'alimentation au bout de la durée tf.4. De même, la réduction de l'amplitude d'impulsion du moteur d'entraînement 40 va être portée à la valeur zéro et donc à l'arrêt complet de ce moteur entre la fin de la durée tf.4 et la fin de la durée tf.5.

Le cycle de dégivrage sur un aller du balai est alors terminé et ce dernier peut alors être ramené vers son point bas PB selon son fonctionnement classique d'essuyage du pare-brise. Le balayage de retour est préférentiellement utilisé pour purger le système de canalisation 5 de son liquide de dégivrage, par une mise en fonctionnement de la pompe de lavage 21. Le liquide projeté au cours de cette phase de descente du balai fournit avantageusement une pellicule de protection au pare-brise, ce qui évite la réapparition de givre sur le celui-ci. Puis, en fonction de la situation du pare-brise, un nouveau cycle de dégivrage peut alors être mis en oeuvre au cours de la montée suivante du balai.

Alternativement, la régulation de la pression au niveau de la sortie de la pompe peut également être pilotée en faisant varier la tension d'alimentation de ladite pompe.

Le fonctionnement du cycle de dégivrage d'un pare-brise, selon l'invention, se présente ainsi, hors les cycles d'amorçage et d'achèvement :
Le secteur angulaire qui est balayé par chacun des balais est découpé en secteurs élémentaires consécutifs dont l'amplitude correspond à l'efficacité nécessaire pour l'étalement d'une quantité donnée de liquide de dégivrage sur ce secteur élémentaire et son imprégnation de la glace, compte tenu d'une vitesse ralentie pour la rotation des balais.

Le moteur d'entraînement 40 est successivement porté à sa vitesse maximale, par une montée à 100% de la largeur d'impulsion de son signal de commande, puis maintenu à cette valeur pendant trois durées ti.2, ti.3 et ti.4. La durée ti.2 correspond à la durée nécessaire pour porter la largeur d'impulsion du signal de commande de la pompe d'alimentation 22 de sa valeur réduite à celle de 100%. La durée ti.3 correspond au temps nécessaire pour que la quantité recherchée de liquide de dégivrage soit délivrée aux orifices 15 du balai. Enfin la durée ti.4 correspond à la durée de ralentissement de la pompe qui résulte de la réduction de la largeur d'impulsion de son signal de commande de 100% à 60%, une amplitude d'impulsion de son signal de commande de 40% étant atteint à la fin de la durée ti.5. Pendant la durée ti.4, du liquide de dégivrage est encore envoyé en abondance par la pompe d'alimentation et la vitesse de rotation du moteur 40 d'entraînement des balais est maintenue à sa valeur maximale. On note que le moteur d'entraînement 40 est toujours à son régime maximum lorsque la pompe d'alimentation 22 est portée à sa pression de sortie maximale, pour assurer une bonne répartition du liquide de dégivrage sur le secteur élémentaire considéré. Par ailleurs la durée pendant laquelle la pompe d'alimentation 22 est à sa pression maximale est plus courte que la durée pendant laquelle le régime du moteur 40 est à sa pression maximale, une durée pendant laquelle la pompe d'alimentation 22 est à sa pression maximale étant précédée et suivie par une période de rotation maximale du moteur d'entraînement. La séquence de ces périodes de régime et de pression de sortie maximales assure une bonne distribution du liquide de dégivrage, avec une efficacité optimale pour l'imprégnation de la glace, et avec pour résultat une réduction de la quantité liquide de dégivrage nécessaire.

La largeur d'impulsion du signal de commande du moteur d'entraînement 40 est ensuite amenée à une valeur réduite (typiquement 50%, sans que cette valeur soit impérative) qui correspond à une rotation plus lente du balai. Cette vitesse réduite correspond à une phase d'étalement du liquide de dégivrage sur le secteur élémentaire considéré et d'imprégnation de la glace, pour laisser à ce liquide le temps d'agir.

Les largeurs d'impulsion du moteur d'entraînement 40 et de la pompe d'alimentation 22 sont maintenues quelque temps à leurs valeurs réduites avant de relancer un nouveau cycle de dégivrage sur le secteur élémentaire suivant, avec une relance de la largeur d'impulsion du moteur d'entraînement, puis de celle de la pompe d'alimentation.

En fin de cycle de dégivrage, quand le balai arrive à proximité de son point haut PH, le cycle sur le dernier secteur élémentaire "f" consiste simplement à ramener les largeurs d'impulsion des signaux de commande des deux équipements vers zéro, en stoppant la délivrance du liquide de dégivrage et en arrêtant la rotation du moteur d'entraînement.

Au final cette gestion de la pression donnée à la pompe d'alimentation et de la vitesse du moteur d'entraînement permet des économies substantielles sur la consommation du liquide de dégivrage, sans que la qualité du dégivrage en soit dégradée.

## Revendications

1. Procédé de lavage d'une vitre (10) de véhicule automobile, ledit véhicule étant équipé d'un dispositif (1) comprenant :
- au moins un réservoir (3) contenant un fluide, de préférence un fluide dégivrant,
- un système de canalisation (5) reliant le au moins un réservoir à des orifices (15) par lesquels est projeté le fluide sur le pare-brise (10),
- une pompe d'alimentation (22) destinée à faire circuler le fluide dans le système de canalisation (5) jusqu'à son éjection par les orifices (15) précités, et
- au moins un balai d'essuyage (30) apte à se déplacer sur la vitre (10) entre un point bas (PB) et un point haut (PH) sous l'action d'un moteur d'entraînement en rotation (40),
**caractérisé en ce qu'**il comprend :
a) un découpage du secteur angulaire balayé par ledit au moins un balai en secteurs élémentaires, et
b) sur, au moins un desdits secteurs élémentaires, une modulation de la pression de sortie de la pompe d'alimentation (22) entre une pression dite nominale et une pression, non nulle, réduite par rapport à cette pression nominale.

2. Procédé selon la revendication 1, dans lequel la pression réduite est au moins égale à 40% de la valeur nominale.

3. Procédé selon l'une des revendications 1 ou 2, dans lequel la pression de sortie de ladite pompe d'alimentation varie sur ledit au moins un desdits secteurs élémentaires d'une valeur réduite à sa valeur nominale puis de cette valeur nominale à une valeur réduite.

4. Procédé selon la revendication 3, dans lequel la pression de sortie de ladite pompe varie sur chacun des secteurs élémentaires balayés par ledit balai au cours de la montée vers son point haut (PH), à l'exception éventuelle d'un secteur d'amorçage et d'un secteur d'achèvement, d'une valeur réduite à sa valeur nominale puis revient à sa valeur réduite initiale.

5. Procédé selon l'une des revendications précédentes, **caractérisé en ce qu'**il comprend, sur ledit au moins un des secteurs élémentaires, une modulation de la vitesse de rotation du moteur d'entraînement (40) entre une vitesse dite nominale et une vitesse, non nulle, réduite par rapport à cette vitesse nominale.

6. Procédé selon la revendication 5, dans lequel la vitesse de rotation réduite est au moins égale à 50% de la vitesse nominale.

7. Procédé de lavage selon l'une des revendications 5 ou 6, dans lequel la vitesse de rotation du moteur d'entraînement (40) varie sur ledit au moins un des secteurs élémentaires d'une valeur réduite à sa valeur nominale puis de cette valeur nominale à une valeur réduite.

8. Procédé selon la revendication 7, dans lequel la vitesse de rotation dudit moteur d'entraînement (40) varie sur chacun des secteurs élémentaires balayés par ledit balai au cours de la montée vers son point haut (PH), à l'exception éventuelle d'un secteur d'amorçage et d'un secteur d'achèvement, d'une valeur réduite à sa valeur nominale puis revient à sa valeur réduite initiale.

9. Procédé selon l'une des revendications 5 à 8, dans lequel ladite vitesse de rotation du moteur d'entraînement (40) est toujours nominale quand la pression de la pompe d'alimentation (22) est nominale.

10. Procédé selon la revendication 9, dans lequel la vitesse du moteur d'entraînement (40) est nominale avant l'atteinte de sa valeur nominale par la pression de sortie de la pompe d'alimentation (22) et/ou après la réduction de ladite pression de sortie par rapport à sa valeur nominale.

11. Procédé selon l'une des revendications 1 à 10, **caractérisé en ce qu'**il est mis en oeuvre lors de la montée dudit balai vers le point haut (PH), une purge du système de canalisation (5) étant mise en oeuvre lors de la redescente dudit balai vers le point bas (PB).

12. Dispositif de lavage d'une vitre de véhicule automobile comprenant :
- au moins un réservoir (3) contenant un fluide, de préférence un fluide dégivrant,
- un système de canalisation (5) reliant le au moins un réservoir à des orifices (15) par lesquels est projeté le fluide sur la vitre (10),
- une pompe d'alimentation (22) destinée à faire circuler le fluide dans le système de canalisation (5) jusqu'à son éjection par les orifices (15) précités, et
- au moins un balai d'essuyage (30) apte à se déplacer sur la vitre (10) sous l'action d'un moteur d'entraînement en rotation (40),
**caractérisé en ce qu'**il comprend en outre un moyen de commande (60) capable de moduler la pression de sortie de la pompe d'alimentation (22) entre une pression dite nominale et une pression, non nulle, réduite par rapport à cette pression nominale.

13. Dispositif selon la revendication 12, dans lequel ledit moyen de commande (60) est capable de moduler la vitesse de rotation du moteur d'entraînement (40) dudit balai d'essuyage (30) entre une vitesse dite nominale et une vitesse, non nulle, réduite par rapport à cette vitesse nominale.

14. Dispositif selon l'une des revendications 12 ou 13, dans lequel le moteur d'entraînement (40) et/ou la pompe d'alimentation (22) sont du type pas à pas à courant continu, ou du type réversible, dont la vitesse de rotation et/ou respectivement la pression de sortie sont contrôlées par une modulation de la largeur d'impulsion de leur signal de commande.
